# EUROPEAN PATENT SPECIFICATION

(11) **EP 1 175 529 B1**
(45) Date of publication and mention of the grant of the patent: **12.04.2006**
(21) Application number: 00931902.1
(22) Date of filing: 05.05.2000
(51) Int. Cl.: E01B 25/24, B61B 10/02, B65G 9/00

(54) **SOUND ABATEMENT METHODS AND CONVEYOR TROLLEYS**
VERFAHREN ZUR SCHALLDÄMMUNG UND FÖRDERWAGEN
PROCEDE REDUCTEUR DE SON ET CHARIOTS TRANSPORTEURS

(30) Priority: 06.05.1999 US 132725 P
(43) Date of publication of application: 30.01.2002
(73) Proprietor: JERVIS B. WEBB INTERNATIONAL COMPANY, Farmington Hills, Michigan 48331-5624 (US)
(72) Inventor: DEVNANI, Deepak, Waterford, MI 48327 (US); ARISS, Christopher, M., Fenton, MI 48430 (US); SMITH, Craig, R., Milford, MI 48340 (US)
(74) Representative: Crouch, David John
(86) International application number: PCT/US2000/006694
(87) International publication number: WO 2000/068504

(56) References cited:
- GB-A- 2 099 771
- GB-A- 2 292 131

## Description

This application claims the priority of U.S. provisional patent application 60/132,725, filed May 6, 1999.

### FIELD OF THE INVENTION

The present invention is directed to sound abatement methods and conveyor trolleys, and, in particular, to methods and conveyor trolleys whereby a sound abating material is applied to certain areas of trolley components to reduce the noise generated by collision between two trolleys.

### BACKGROUND ART

Power and free conveyors are made up of a power track, a free track and a number of carriers traveling along the free track. Each carrier includes leading and trailing trolleys, and the trolleys are placed on the free track and support the carrier. The power track includes a power chain that travels along the power track. Frequently, the power and free tracks are arranged adjacent to each other and in parallel. Each leading trolley may include a retractable dog which extends toward the power track and which is engageable by a pusher dog carried by the moving power chain in the power track. When the pusher dog engages the retractable dog, the trolley , and thus the carrier, is pushed by the moving power chain to travel along the free track. When the retractable dog is retracted, or otherwise disengaged from the pusher dog, the trolley loses power and stops moving.

One of the advantages of the power and free conveyors is that the conveyors allow accumulation of carriers. Power and free conveyers often include one or more accumulation sections where a number of stopped carriers are stored in a closely spaced or contacting relationship until they are needed. In order to stop and accumulate a moving carrier, the leading trolley of the moving carrier is made to collide with the trailing trolley of a downstream stopped carrier. As the two trolleys collide, the cam lever of the leading trolley of the carrier strikes the accumulation cam of the trailing trolley of another carrier, causing the cam lever to raise the retractable dog of the leading trolley. Retracting the retractable dog disengages the retractable dog from the pusher dog so that the leading trolley, and thus the moving carrier, is no longer driven by the moving power chain.

Such collisions often generate loud noises. A carrier is, made of metals and metal alloys and may carry a heavy workpiece, and thus is quite heavy. Consequently, a moving carrier possesses a large mount of kinetic energy, and this energy must be dissipated in order to stop the carrier. Because the carriers and trolleys are made from metal and metal alloys, a significant amount of energy from each collision is dissipated as sound waves. Since a conveyor line may have multiple accumulation sections and a plant may have multiple conveyor lines, the noises generated by the accumulation of carriers are substantial and frequent. The noises can be unpleasant and may have adverse health effects on employees working in the vicinity of accumulation sections.

In view of the adverse effects caused by the noises, a need has developed to provide improvements in sound abatement in connection with trolley operation.

GB 2 292 131 discloses a power and free conveyor system which has substantially reduced audible noise levels particularly due to coupling and uncoupling upon the accumulation of the carriers, in which non-metallic inserts are provided in the abutting surfaces both in connection with the accumulating member of the carrier and in connection with the abutting surfaces upon which the sliding components of the carrier move.

GB 2 099 771 discloses a conveyor system which can be designed to offer several additional constructional and operational features including: the capability of providing two types of conveyor systems, one having the power track located below the carrier track and the other having the power track located above the carrier track; stops which positively arrest forward movement of a carrier; and carrier bumpers and accumulating mechanism which are located within a protected space partially enclosed by the structural members forming the carrier track.

### SUMMARY OF THE INVENTION

It was found that, although a significant portion of the noise is caused by the direct collision between the body of the leading trolley and the body of the trailing trolley, other contacts among trolley components may also generate noises. In many applications, a relatively large portion of the noise is generated by the contacts among components of the leading trolley and between certain components of the leading trolley and certain components of the trailing trolley. For example, a relatively large portion of the noise may be generated by the contacts between the cam lever of the leading trolley and the accumulation cam of the trailing trolley, between the cam lever and the body of the leading trolley, between the cam lever and the retractable dog of the leading trolley, between the retractable dog and the body of the leading trolley and the contact between the retractable dog and the pusher dog during the retraction of the retractable dog from the pusher dog. There contacts include both direct and sliding contacts.

It was discovered that the application sound abating materials to the areas where these contacts take place can reduce the noise level generated during trolley collisions. These areas may include areas on the trolley components including the trolley body, cam lever and retractable dog of the leading trolley, as well as the accumulation cam of the trailing trolley. It was also discovered that sound abating effects may be achieved by applying sound abating materials to one or more areas of trolley components where no contact takes place. The application of the sound abating materials may include attaching the materials to these areas, including coating, gluing, frictional fit, and/or filling the cavities in these areas with the sound abating materials.

The present invention provides sound abatement methods and conveyor trolleys. According to one aspect of the invention, a method includes applying a sound abating material to at least one area of at least one of the following components: a cam lever of the moving trolley; a retractable dog of the moving trolley; an accumulation cam of the stopped trolley; a body of a moving trolley where the body contacts a cam lever or a retractable dog of the moving trolley.

According to another aspect of the invention, a conveyor trolley according to the present invention includes a trolley body having at least one wheel for traveling in a track and at least one component cooperatively associated with the trolley body. The component has at least one area and a sound abating material applied to the area for sound abatement; the said at least one component being any one of the following: a cam lever of the trolley; a retractable dog of the trolley; an accumulation cam of the trolley; a body of the trolley were the body contacts a cam lever or a retractable dog of the trolley.

According to a further aspect of the invention, a component of a conveyor trolley the component having at least one area to which a sound abating material is applied for sound abatement, the component being any one of the following: a conveyor trolley cam lever; a conveyor trolley retractable dog; a conveyor trolley accumulation cam; a conveyor trolley body where the body contacts a cam lever or a retractable dog of such a trolley when in use.

### BRIEF DESCRIPTION OF THE DRAWINGS

Figure 1 shows one embodiment of a trolley according to the invention, which includes a retractable dog in the extended position for engagement with a pusher dog;
Figure 2 shows the trolley of Figure 1 with the retractable dog in the retracted position for disengagement with the pusher dog;
Figures 3 and 4 are side and top views, respectively, of the cam lever of the trolley of Figure 1 with sound abatement features;
Figures 5A to 5C are cross section views of the sound abating material along lines A-A, B-B, and C-C of Figure 3;
Figures 6, 7 and 8 are side, end and bottom views, respectively, of the retractable dog of the trolley of Figure 1; and
Figures 9A to 9D are cross section views of the sound abating material along lines A-A, B-B, C-C and DD of Figure 6.

### DESCRIPTION OF THE PREFERRED EMBODIMENTS

The following description of the presently preferred embodiments of the invention refers to the accompanying drawings. The description is directed to and the drawings show exemplary embodiments of the invention, other embodiments are possible, and changes may be made to the embodiments described below without departing from the scope of the invention. The scope of the invention is defined by the appended claims, and the description and drawings are merely illustrative, not limiting.

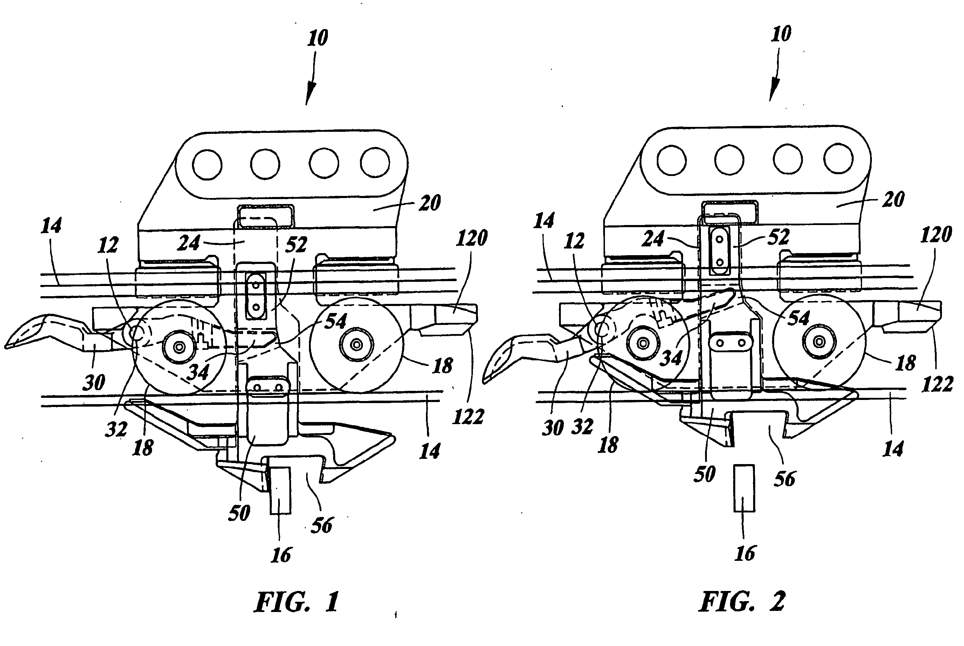

With reference to Figures 1 and 2, one embodiment of the invention is a trolley 10 of a carrier used in a power and free conveyor system. The trolley may include one or more components, such as a bumper. The trolley 10 includes one or more areas and one or more sound abating materials applied to the areas for sound abatement. The trolley 10 may be used as either a leading trolley or a trailing trolley of a carrier.

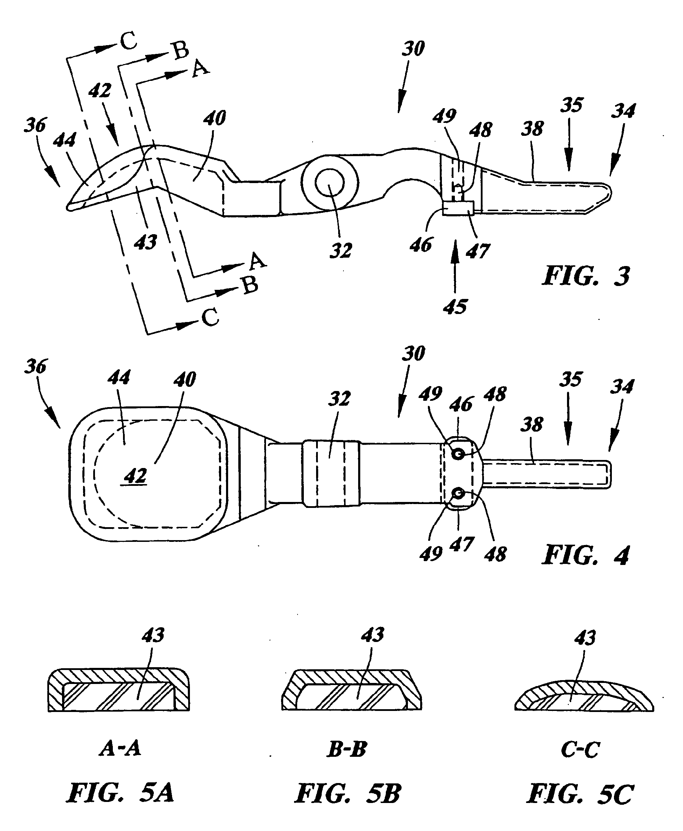

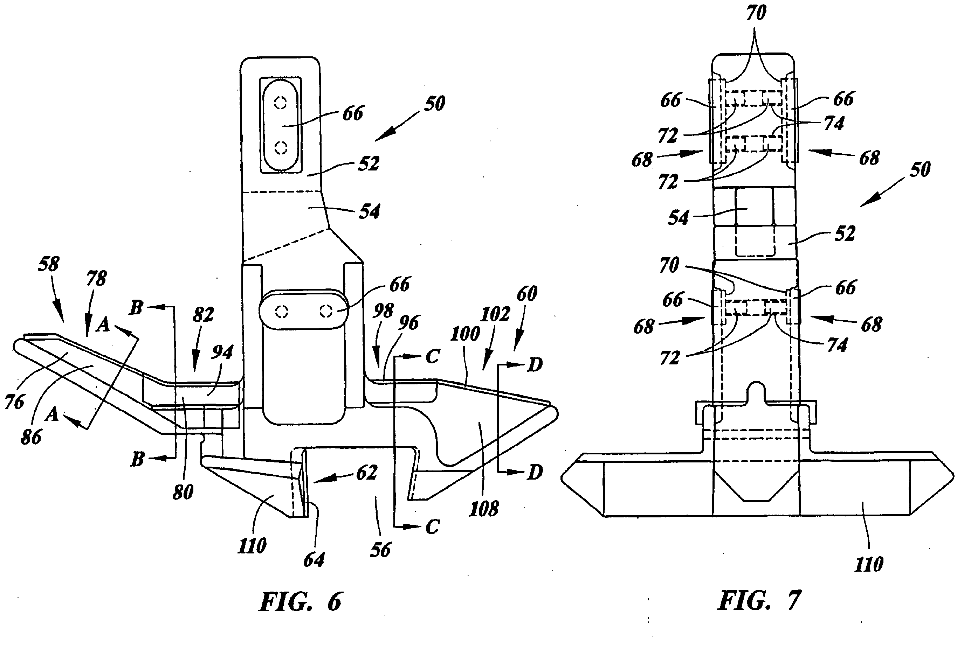

In the embodiment shown in Figures 1 and 2, the trolley 10 may include a trolley body 20, a cam lever 30, a retractable dog 50 and an accumulation cam 120. The cam lever 30 is also illustrated in Figures 3 and 4, and the retractable dog 50 in Figures 6 and 7. The cam lever 30 is mounted for pivotal movement to the trolley body 20 by a pivot pin 12 extending through a bore 32 in the cam lever 30. The retractable dog 50 preferably includes a stem 52 that is moveable within a channel 24 in the trolley body 20. The stem 52 may have an opening 54 sized to receive an end portion 34 of the cam lever 30.

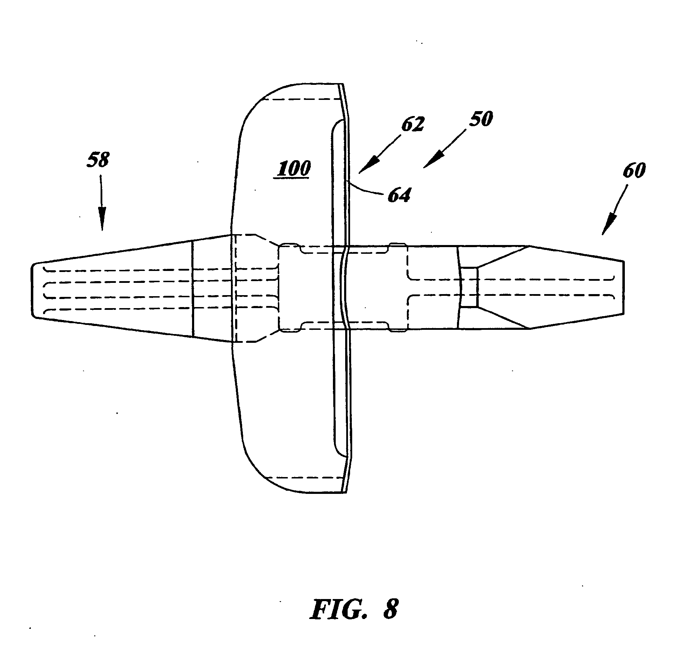

In operation, the trolley 10 may be placed in the free track 14 of the power and free conveyor system and preferably has a number of wheels 18 that allow the trolley 10 to travel in the free track 14. The retractable dog 50 of the trolley 10 is engageable with any one of a number of pusher dogs 16 joined to a moving power chain (not shown). The moving power chain travels in the power track (not shown) of the conveyor system, and the power track is preferably arranged adjacent to and substantially in parallel with the free track 14. When the retractable dog 50 is engaged with a pusher dog 16, the pusher dog 16 extends into a channel 56 of the retractable dog 50 and pushes against a wing 110 of the retractable dog 50 to drive the trolley 10 in the free track 14. The wing 110 of the retractable dog 50 is better illustrated in Figure 8.

To stop and accumulate a moving carrier, the leading trolley 10 of the moving carrier is disengaged from the pusher dog 16. To that end, the leading trolley 10 is made to collide with the trailing trolley of a stopped carrier (not shown). When the leading trolley 10 collides with the trailing trolley, an end 36 of the cam lever 30 of the leading trolley 10 contacts the accumulation cam of the trailing trolley. This contact pushes the cam lever 30 from the position shown in Figure 1 to the position shown in Figure 2. The pivoting action causes the retractable dog 50 to move upwardly and retract into the channel 24. The retraction of the retractable dog 50 disengages the retractable dog 50 from the pusher dog 16, allowing the pusher dog 16 to continue its travel without driving the trolley 10.

During this operation, there are a number of direct and sliding contacts among the various trolley components. For example, the cam lever 30 may contact the trolley body 20, the retractable dog 50, and the accumulation cam of the trailing trolley; and the retractable dog 50 may contact the trolley body 20 and the pusher dog 16. These contacts may increase the level of noise generated during a collision between the leading and trailing trolleys.

To reduce the level of noise generated by a collision, one or more components of the trolley 10, including the trolley body 20, the cam lever 30, the retractable dog 50, and the accumulator cam 120, may include one or more areas to which a sound abating material is applied.

For example, as shown in Figures 3 and 4, the cam lever 30 may include one or more areas and a sound abating material applied thereto. The cam lever 30 may have an elongated configuration with two end portions 34, 36 and a pivot bore 32 disposed between the two end portions 34, 36. One end portion 34 of the cam lever 30 may include an area 35 and a sound abating material 38 applied to the area 35. This area 35 may extend around the entire surface of the end portion 34 and may extend a distance from the end towards the pivot bore 32. This end of the cam lever 30 extends through the opening 54 on the stem 52 of the retractable dog 50, and, during a collision, the end portion 34 of the cam lever 30 contacts the retractable dog 50 to push the retractable dog 50 upward. The other end portion 36 of the cam lever 30 may includes a cavity 40 and a contact area 42. The cavity 40 is a non-contact area, i.e., the area does not come in contact with another component of the trolley 10 during a collision, and may be filled with a sound abating material 43 for noise and vibration dampening. Figures 5A to 5C show the cross sections of the sound abating material 43 at three locations shown in Figure 3. The contact area 42, which contacts the accumulation cam of a trailing trolley for actuation of the cam lever 30 and retractable dog 50, may include a sound abating material 44 applied thereto.

The cam lever 30 may also include another contact area 45 to which a member 46 made of a sound abating material is applied. This area 45 of the cam lever 30 comes in contact with the trolley body 20 during a collision. The member 46 may have the configuration of a block 47 and may be applied to the area 45 in various ways. For example, as shown in Figures 3 and 4, the member 46 may include one or more stems 48 extending from the block 47, and the stems 48 may extend into bores 49 in the cam lever 30. An interference fit between the stems 48 and the bores 49 attaches the member 46 to the cam lever 30. With this configuration, the member 46 can be easily removed and replaced with a new one by merely pushing the stems 48 of a new member into the bores 49 once the old member is removed. Although the member 46 is attached to the cam lever 30 through an inference fit, the member 46 may be attached to the cam lever 30 using any suitable method, such as using an adhesive.

As shown in Figures 6, 7 and 8, the retractable dog 50 may also include one or more areas to which a sound abating material is applied. The retractable dog 50 may include first and second cam portions 58, 60 disposed at the opposite ends of the retractable dog 50, a stem 52 disposed perpendicularly with respect to the cam portions 58, 60, and a wing 110 disposed between the two end portions 58, 60. The wing 110 is perpendicular to both the cam portions 58, 60 and the stem 52. The wing 110 may include an area 62 to which a sound abating material 64 may be applied. This area 62 on the wing 110 is where the wing 110 contacts the pusher dog 16.

Additionally or alternatively, as shown in Figures 6 and 7, a sound abating material 66 may be applied to areas 68 on the stem 52 of the retractable dog 50 where the stem 52 contacts the channel 24 of the trolley body 20 during a collision. While there is little direct contact between the stem 52 and the channel 24 in these areas 68, sliding contact does occur. It has been discovered that application of a sound abating material to these areas 68 of the stem 52 contributes to sound abatement.

The sound abating material 66 may be applied to the areas 68 of the stem 52 in various manners. The preferred method is to apply the sound abating material 66 to a recess 70 on the stem 52 so that the overall dimensions of the stem 52 do not change to inhibit its travel in the channel 24, although the sound abating material 66 may extend slightly beyond the surfaces of the stem 52 without interfering with stem travel. In the illustrated embodiment, a piece of sound abating material 66, which has the configuration of a sheet or pad, is attached to each area 68 on the stem 52 in a manner similar to how the member 46 is attached to the cam lever 30 as shown in Figures 3 and 4. Each piece of sound abating material 66 includes one or more stems 72, which are inserted into bores 74 in the stem 52 for an interference fit.

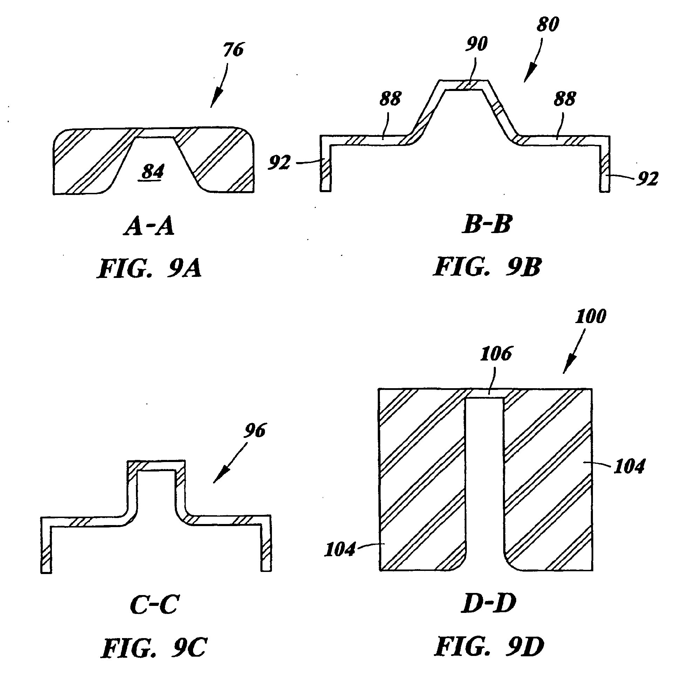

Further, a sound abating material may be applied to certain contact and non-contact areas on the first cam portion 58 of the retractable dog 50. In the embodiment illustrated in Figures 6 and 7, a sound abating material 76 is applied to a non-contact area 78, and another piece of sound abating material 80 is applied to a contact area 82 that comes in contact with the trolley body 20 when the retractable dog 40 retracts into the channel 24. The sound abating material 76 applied to the non-contact area 78 has a generally rectangular configuration, as shown in Figure 9A, and is placed on the top of the cam portion 58. This piece of sound abating material 76 includes a groove 84 to accommodate a ridge 86 atop the cam portion 58. The sound abating material 80 applied to the contact area 82 is also configured to accommodate the configuration of the cam portion 58, as shown in Figure 9B. The sound abating material 80 has the configuration of a sheet with two horizontal sections 88 attached to the top of the cam portion 58, a section 90 between the two horizontal sections 88 to accommodate the ridge 86 atop the cam portion 58, and two vertical sections 92 attached to the sides 94 of the cam portion 58. The sound abating material 76, 80 applied to the first cam portion 58 acts as a damper to reduce the ringing associated with the cam portion 58 since the cam portion 58 functions similar to a tuning fork when the trolley 10 collides with another trolley.

Similarly, a sound abating material may be applied to non-contact and contact areas of the second cam portion 60 of the retractable dog 50. For example, a sound abating material 96 may be applied to a contact area 98 of the second cam portion 60. This contact area 98 of the retractable dog 50 contacts the trolley body 20 when the retractable dog 50 retracts into the channel 24. As shown in Figure 9C, this sound abating material 96 is similar to the material 80 applied to the contact area 82 of the first cam portion 58. Thus no further description of the sound abating material 96 is provided. A sound abating material 100 is also applied to a non-contact area 102 of the second ram portion 60. As shown in Figure 9D, this piece of sound abating material 100 has a generally rectangular configuration with two relatively thick vertical sections 104 and a relatively thin horizontal section 106 connecting the two vertical sections 104 at the top. This piece of sound abating material 100 is attached to a ridge 108 atop the second cam portion 60, with the two vertical sections 102, 104 attached to the sides of the ridge 108 and the horizontal section 106 attached to the top of the ridge 108.

A sound abating material may be applied to the accumulation cam 120 in areas that may contact the cam lever 30 during a collision. As shown in Figures 1 and 2, a sound abating material 122 is applied to a contact area of the accumulation cam 120. This contact area comes in contact with a cam lever during a collision.

In the present embodiment, when there is contact between two components of the trolley 10, such as the contact between the trolley body 20 and the retractable dog 50, the sound abating material generally is only applied to one of the two components, such as the retractable dog 50. Alternatively, the sound abating material may be applied only to the other component of the trolley 10 or to both components.

A sound abating material may be applied to an area of the trolley in various manners. The application of a sound abating material may include attachment of a sound abating material to a contact or non-contact area on a trolley by means of spray coating and/or adhesives. Alternatively, a sound abating material may be more loosely attached to an area of a trolley. For example, as shown in Figures 3 and 4, a sound abating material functioning as a cushion may be attached to a trolley by means of an interference fit between one or more stems and corresponding bores in which the stems are disposed. In accordance with a preferred method of attaching a sound abating material, the material may be molded into a configuration that conforms to the area of the trolley, to which the material is to be attached. The molded sound abating material can then be secured to the area of the trolley using any suitable attaching methods, such as by using adhesives. Preferably, the area to which the sound abating material is attached may be machined and/or polished to create a smooth surface for effective attachment. The thickness of the molded sound abating material may vary depending on the application. In some applications, the sound abating material may have the configuration of a thin sheet, while in other applications the sound material may be thicker, having the configuration of a pad or a block, for example.

The sound abating materials may perform various functions. The functions performed by a sound abating material may include the functions of a cushion, a noise and vibration damper and/or a noise and vibration insulator. The sound abating materials used in the present invention may be any materials suitable to perform one or more of these functions. Suitable materials may include, for example, any resilient materials, such as rubber and polymeric materials. Preferably, the sound abating material has sufficient strength to be securely attached to an area of the trolley and is sufficiently resilient for effective sound abatement. An example of preferred sound abating materials is polyurethane with any suitable durometer readings, preferably within the range of 60 to 90, more preferably within the range of 70 to 80. In some applications, polyurethane with durometers greater than 90 may not provide effective sound abatement, while polyurethane with durometers less than 60 may not have sufficient strength to be securely attached to an area of the trolley. In other applications, however, polyurethane having a durometer outside of the range of 60 to 90 may be an effective sound abating material.

Another aspect of the invention is a sound abatement method for reducing noises generated trolley collisions. The method may include applying a sound abating material to one or more areas on one or more trolley components. As discussed above, the sound abating material may be applied to these area using any suitable methods, and these areas may be include contact and non-contact areas.

### Tests

Tests were conducted to determine the level of sound abatement achieved by conveyor trolleys with polyurethane sound abating material.

### Test Description Summary

Standard 100-mm (4-inch) dog magic trolleys were compared to sound deadened trolleys in a 100-mm (4-inch) inverted straight track setup. The following components were used in the sound deadened trolley assemblies: a 100-mm (4-inch) inverted trolley assembly with a bumper; and urethane molded/bonded to the retractable dog as depicted in Figures 1 to 9. The modified trolleys were designated as new and retrofit (new = molded and retrofit = bonded).

Sound deadened 100-mm (4-inch) inverted cam levers had urethane filled cavities and coated tangs as shown in Figures 1 to 9. The new and retrofit designs also applied to the 100-mm (4-inch) inverted cam lever. The rest of the components used were standard equipment. Vendors provided sets of 6 dogs and 6 cams (1 retrofit set and 2 new sets). Manufacturer, Polyflex, Inc., bonded the retrofit set, and manufacturers, Kastalon and Winfield, molded new sets.

In order to obtain the sound levels emitted by the 100-mm (4-inch) trolley assemblies, a comparable 100-mm (4-inch) inverted system was created. A 100-mm (4-inch) inverted track assembly was used with the pusher, cylinder, and loaded trolleys to produce similar sound levels to a 100-mm (4-inch) inverted system. The steel trolleys and urethane fitted trolleys were then compared.

Sound measurement parameters included: equivalent continuous sound level with exchange rate of 5dB, RMS levels exceeded 10%, 50%, and 90% of the time, peak levels, maximum SPLs, and minimum SPLs.

### Objective:

To obtain the noise levels of the 100-mm (4-inch) inverted retractable dogs engaging with the pusher dogs of the lead trolley being stopped by the stop blade, and of the secondary trolley banking into the lead trolley. In other words, to obtain the sound levels in a 100-mm (4-inch) inverted test stand that are comparable to a 100-mm (4-inch) inverted system. Another objective was to compare steel vs. urethane coated components to see if there is a sound abatement in the latter.

### Acceptance Criteria

With the goal of reducing overall system sound, it will be acceptable if a certain dBA "customer to determine" noise reduction is accomplished with the following sound deadened components: 100-mm (4-inch) inverted dog magic trolley assembly, an inverted cam lever, and urethane molded/bonded to the inverted retractable dog and lever.

### Procedure

Setup for this test stand included bolting an air cylinder with a 150-mm (6-inch) bore, which was used to actuate the pusher, to the straight track. The cylinder rod was connected to the pusher weldment with a pin with a 25-mm (1-inch) diameter. The speed of the cylinder was set to 0.3 meter/second (60 ft/min), without load. The line pressure used in the test was from shop air. The pressure from the tank on the mezzanine read 0.827MPa (120 psi). The pressure read from the floor at the test stand was 0.758 MPa (110 psi). Note: the regulator was set all the way open. No flow controls or exhaust metering devices were used in the air circuit.

Two sets of two trolleys were installed into the system with 386 kg (850 pounds) on each pair. The lead trolleys had inverted retractable dogs while the trailing trolley did not. They were positioned the same each time for pusher pick up. That position was 75 mm (3 inches) before the pusher dog engages the inverted retractable dog for both lead trolleys. The test was repeated with consistent positioning of trolleys for each pick up.

Ambient noise levels were taken twice at each new position. Noise readings were obtained for cylinder only operation with the three position valve (control valve with lever). To do this, the trolleys were banked into the stop blade and the cylinder was run back and forth twice while sound testing. Next, the pusher was put into the back position ready for pick up. The trolleys experienced the following sequence. First, the trolleys were "picked up" by the pusher. Then, the lead trolley was stopped by a blade mounted to the track. Finally, the trailing trolley assembly was banked into the lead assembly. That finished the sequence of the sound test. This sequence was repeated 10 times at each position.

### Data & Results

| Manufacturer of coating | SPL Average |
|---|---|
| Polyflex | 83.7 dBA |
| Kastalon | 84.3 dBA |
| Winfield | 84.0 dBA |
| Steel | 86.1 dBA |

### Conclusions

Trolleys were compared with these differences: steel bumper, steel cam, and steel dog vs. urethane bumper, urethane coated cam and dog. The results from these two configurations showed that the urethane coated trolleys were on average 2dBA lower sound level than the steel. The sound test did not differ more than 0.5dBA between different manufacturers of sound deadened dogs and cams. This can be explained by the impulse nature of the impact of 386 kg (850 pounds). loads being significantly louder than the engagement of the inverted retractable dog with the chain dog. In other words, the dynamics of the 386 kg (850 pounds) loads stopping produce more noise than anything else going on in this system. Moreover, the lead steel trolley of the secondary pair hitting the steel trolley of the lead pair is louder than the other three tests with a urethane bumper to soften the impact of the loads. Therefore, noting that there are differences in the sound levels emitted by a struck sound deadened inverted retractable dog and due to the fact that the these differences did not significantly surface during sound testing, this leads to the conclusion that the urethane trolley used on the three sound deadened configurations precipitated the difference in sound levels in this test. Future considerations should include an entire stop, not just a stop blade, for accurate sound levels of a trolley experiencing a stop.

## Claims

1. A method for abating sound generated during the disengagement of a moving trolley from a pusher dog by collision between the moving trolley and a stopped trolley, the method comprising applying a sound abating material to at least one area of at least one of the following components:
a cam lever (30) of the moving trolley;
a retractable dog (50) of the moving trolley;
an accumulation cam (120) of the stopped trolley;
a body (20) of a moving trolley where the body (20) contacts a cam lever (30) or a retractable dog (50) of the moving trolley.

2. The method of claim 1, wherein applying a sound abating material to at least one area of at least one component of the moving and stopped trolleys includes applying the sound abating material to at least one area of a cam lever (30) of the moving trolley.

3. The method of claim 2, wherein the at least one area of the cam lever (30) includes at least one area which contacts a body (20) of the moving trolley.

4. The method of claim 2 or 3, wherein the at least one area of the cam lever (30) includes at least one area which contacts an accumulation cam (120) of the stopped trolley.

5. The method of claim 2, 3 or 4, wherein the at least one area of the cam lever (30) includes at least one area which contacts a retractable dog (50) of the moving trolley.

6. The method of any one of the preceding claims, wherein applying a sound abating material to at least one area of at least one component of the moving and stopped trolleys includes applying the sound abating material to at least one area of a retractable dog (50) of the moving trolley.

7. The method of claim 6, wherein the at least one area of the retractable dog (50) includes at least one area which contacts a body (20) of the moving trolley.

8. The method of claim 6 or 7, wherein the at least one area of the retractable dog (50) includes at least one area which contacts a cam lever (30) of the moving trolley.

9. The method of claim 6, 7 or 8, wherein the at least one area of the retractable dog (50) includes at least one area which contacts the pusher dog (16).

10. The method of any one of the preceding claims, wherein applying a sound abating material to at least one area of at least one component of the moving and stopped trolleys includes applying the sound abating material to at least one area of an accumulation cam (120) of the stopped trolley.

11. The method of any one of the preceding claims, wherein applying a sound abating material to at least one area of at least one component of the moving and stopped trolleys includes applying the sound abating material to at least one area of a body (20) of the moving trolley where the body (20) contacts a cam lever (30) of the moving trolley.

12. The method of any one of the preceding claims, wherein applying a sound abating material to at least one area of at least one component of the moving and stopped trolleys includes applying the sound abating material to at least one area of a body (20) of the moving trolley where the body (20) contacts a retractable dog (50) of the moving trolley.

13. The method of any one of the preceding claims, wherein the at least one area includes at least one area of direct contact.

14. The method of any one of the preceding claims, wherein the at least one area includes at least one area of sliding contact.

15. The method of any one of the preceding claims, wherein the at least one area includes at least one non-contact area.

16. The method of any one of the preceding claims, wherein the application of the sound abating material includes coating the sound abating material.

17. The method of any one of the preceding claims, wherein the application of the sound abating material includes molding the sound abating material into a shape and attaching the shape to at least one area.

18. The method of claim 15, wherein the at least one non-contact area includes a cavity, and the application of the sound abating material to the at least one non-contact area includes filling the cavity with the sound abating material.

19. The method of any one of the preceding claims, wherein the sound abating material is a polyurethane.

20. The method of claim 19, wherein the polyurethane sound abating material has a durometer of between around 60 and 90.

21. A trolley (10) comprising:
a trolley body (20) having at least one wheel (18) for traveling in a track (14); and at least one component cooperatively associated with the trolley body (20), the component having at least one area and a sound abating material applied to the area for sound abatement; the said at least one component being any one of the following:
a cam lever (30) of the trolley;
a retractable dog (50) of the trolley;
an accumulation cam (120) of the trolley(10);
a body(20) of the trolley (10) were the body(20) contacts a cam lever(30) or a retractable dog (50) of the trolley (10).

22. The trolley (10) of claim 21, wherein the at least one component is constituted by any one of the following:
a cam lever (30) pivotally mounted to the trolley body(20), the cam lever (30) being moveable between first and second positions;
a retractable dog (50) movable by the cam lever (30); and an accumulation cam (120) cooperatively associated with the trolley body (20); and wherein at least one of the cam lever (30), retractable dog (50), and the accumulation cam (120) includes the at least one area and the sound abating material applied to the area for sound abatement.

23. The trolley (10) of claim 21 or 22, wherein the trolley body (20) has at least one area and a sound abating material applied to the area of the trolley body (20) for sound abatement.

24. The trolley (10) of claim 22 or 23, wherein the cam lever (30) includes at least one area and the sound abating material applied to the area of the cam lever (30) for sound abatement, and the at least one area of the cam lever (30) includes at least one area which is engageable with an accumulation cam (120) of another trolley.

25. The trolley (10) of claim 24, wherein the at least one area of the cam lever (30) includes at least one area which contacts a body (20) of the trolley (10).

26. The trolley (10) of claim 24 or 25, wherein the at least one area of the cam lever (30) includes at least one area which contacts a retractable dog (50) of the trolley (10).

27. The trolley (10) of any one of claims 22 to 25, wherein the retractable dog (50) includes at least one area and a sound abating material applied to the area of the retractable dog (50) for sound abatement.

28. The trolley (10) of claim 27, wherein the at least one area of the retractable dog (50) includes at least one area which contacts a body (20) of the trolley (10).

29. The trolley (10) of claim 27 or 28, wherein the at least one area of the retractable dog (50) includes at least one area which contacts a cam lever (30) of the trolley (10).

30. The trolley (10) of claim 27, 28 or 29, wherein the at least one area of the retractable dog (50) includes at least one area which contacts the pusher dog (16).

31. The trolley (10) of any one of claims 22 to 30, wherein applying a sound abating material to at least one area of at least one component of the trolley (10) includes applying the sound abating material to at least one area of the accumulation cam (120) of the trolley (10).

32. The trolley (10) of any one of claims 21 to 31, wherein the at least one area includes at least one area of direct contact.

33. The trolley (10) of any one of claims 21 to 32, wherein the at least one area includes at least one area of sliding contact.

34. The trolley (10) of any one of claims 21 to 33, wherein the at least one area includes at least one non-contact area.

35. The trolley (10) of any one of claims 21 to 34, wherein the application of the sound abating material includes coating the sound abating material.

36. The trolley (10) of any one of claims 21 to 35, wherein the application of the sound abating material includes molding the sound abating material into a shape and attaching the shape to at least one area.

37. The trolley (10) of claim 34, wherein the at least one non-contact area includes a cavity, and the application of the sound abating material to the at least one non-contact area includes filling the cavity with the sound abating material.

38. The trolley (10) of any one of claims 21 to 37, wherein the sound abating material is a polyurethane.

39. The trolley (10) of claim 38, wherein the polyurethane sound abating material has a durometer of between around 60 and 90.

40. A component of a conveyor trolley (10), the component having at least one area to which a sound abating material is applied for sound abatement, the component being any one of the following:
a conveyor trolley cam lever (30);
a conveyor trolley retractable dog (50);
a conveyor trolley accumulation cam (120);
a conveyor trolley body (20) where the body (20)contacts a cam lever (30) or a retractable dog (50)of such a trolley (10) when in use.

41. The component of claim 40, wherein the said at least one area includes a contact area.

42. The component of claim 40 or 41, wherein the said at least one area includes a non-contact area.

43. The component of any one of claims 40 to 42, wherein the component is a conveyor trolley cam lever (30).

44. The component of any one of claims 40 to 42, wherein the component is a conveyor trolley retractable dog (50).

45. The component of any one of claims 40 to 42, wherein the component is a conveyor trolley accumulation cam (120).

## Patentansprüche

1. Verfahren zum Dämpfen von Schall, der während des Freigebens eines sich bewegenden Karrens von einem Schubmitnehmer durch Kollision zwischen dem sich bewegenden Karren und einem angehaltenen Karren erzeugt wird, wobei das Verfahren das Aufbringen eines schalldämmenden Materials auf wenigstens eine Fläche wenigstens einer der folgenden Komponenten aufweist:
eines Hebedaumens (30) des sich bewegenden Karrens;
eines zurückziehbaren Mitnehmers (50) des sich bewegenden Karrens;
einer Aufnahmeschulter (120) des angehaltenen Karrens;
einer Karosse (20) eines sich bewegenden Karrens, wobei die Karosse (20) im Kontakt mit einem Hebedaumen (30) oder einem zurückziehbaren Mitnehmer (50) des sich bewegenden Karrens ist.

2. Verfahren nach Anspruch 1, wobei das Aufbringen eines schalldämmenden Materials auf wenigstens eine Fläche wenigstens einer Komponente des sich bewegenden und des angehaltenen Karrens das Aufbringen des schalldämmenden Materials auf wenigstens eine Fläche eines Hebedaumens (30) des sich bewegenden Karrens umfaßt.

3. Verfahren nach Anspruch 2, bei dem die wenigstens eine Fläche des Hebedaumens (30) wenigstens eine Fläche umfaßt, die eine Karosse (20) des sich bewegenden Karrens berührt.

4. Verfahren nach Anspruch 2 oder 3, bei dem die wenigstens eine Fläche des Hebedaumens (30) wenigstens eine Fläche umfaßt, die eine Aufnahmeschulter (120) des angehaltenen Karrens berührt.

5. Verfahren nach Anspruch 2, 3 oder 4, bei dem die wenigstens eine Fläche des Hebedaumens (30) wenigstens eine Fläche umfaßt, die einen zurückziehbaren Mitnehmer (50) des sich bewegenden Karrens berührt.

6. Verfahren nach einem der vorangehenden Ansprüche, bei dem das Aufbringen eines schalldämmenden Materials auf wenigstens eine Fläche wenigstens einer Komponente des sich bewegenden oder des angehaltenen Karrens das Aufbringen des schalldämmenden Materials auf wenigstens eine Fläche eines zurückziehbaren Mitnehmers (50) des sich bewegenden Karrens umfaßt.

7. Verfahren nach Anspruch 6, bei dem die wenigstens eine Fläche des zurückziehbaren Mitnehmers (50) wenigstens eine Fläche umfaßt, die eine Karosse (20) des sich bewegenden Karrens berührt.

8. Verfahren nach Anspruch 6, bei dem die wenigstens eine Fläche des zurückziehbaren Mitnehmers (50) wenigstens eine Fläche umfaßt, die einen Hebedaumen (30) des sich bewegenden Karrens berührt.

9. Verfahren nach Anspruch 6, 7 oder 8, bei dem die wenigstens eine Fläche des zurückziehbaren Mitnehmers (50) wenigstens eine Fläche umfaßt, die den Schubmitnehmer (16) berührt.

10. Verfahren nach einem der vorangehenden Ansprüche, bei dem das Aufbringen eines schalldämmenden Materials auf wenigstens eine Fläche wenigstens einer Komponente des sich bewegenden und des angehaltenen Karrens das Aufbringen des schalldämmenden Materials auf wenigstens eine Fläche einer Aufnahmeschulter (120) des angehaltenen Karrens umfaßt.

11. Verfahren nach einem der vorangehenden Ansprüche, bei dem das Aufbringen eines schalldämmenden Materials auf wenigstens eine Fläche wenigstens einer Komponente des sich bewegenden und des angehaltenen Karrens das Aufbringen des schalldämmenden Materials auf wenigstens eine Fläche einer Karosse (20) des sich bewegenden Karrens umfaßt, an der die Karosse (20) einen Hebedaumen (30) des sich bewegenden Karrens berührt.

12. Verfahren nach einem der vorangehenden Ansprüche, bei dem das Aufbringen eines schalldämmenden Materials auf wenigstens eine Fläche wenigstens einer Komponente des sich bewegenden und des angehaltenen Karrens das Aufbringen des wärmedämmenden Materials auf wenigstens eine Fläche einer Karosse (20) des sich bewegenden Karrens umfaßt, an der die Karosse (20) einen zurückziehbaren Mitnehmer (50) des sich bewegenden Karrens berührt.

13. Verfahren nach einem der vorangehenden Ansprüche, bei dem die wenigstens einen Fläche wenigstens eine Fläche des direkten Kontaktes umfaßt.

14. Verfahren nach einem der vorangehenden Ansprüche, bei dem die wenigstens eine Fläche wenigstens eine Fläche des Gleitkontaktes umfaßt.

15. Verfahren nach einem der vorangehenden Ansprüche, bei dem die wenigstens eine Fläche wenigstens eine kontaktfreie Fläche umfaßt.

16. Verfahren nach einem der vorangehenden Ansprüche, bei dem das Auf bringen des schalldämmenden Materials das Beschichten mit dem schalldämmenden Material umfaßt.

17. Verfahren nach einem der vorangehenden Ansprüche, bei dem das Aufbringen des schalldämmenden Materials das Formen des schalldämmenden Materials in eine Raumform und das Befestigen der Raumform an wenigstens einer Fläche umfaßt.

18. Verfahren nach Anspruch 15, bei dem die wenigstens eine kontaktfreie Fläche einen Hohlraum umfaßt und das Aufbringen des schalldämmenden Materials auf die wenigstens eine kontaktfreie Fläche das Füllen des Hohlraums mit dem schalldämmenden Material umfaßt.

19. Verfahren nach einem der vorangehenden Ansprüche, bei dem das schalldämmende Material ein Polyurethan ist.

20. Verfahren nach Anspruch 19, bei dem das schalldämmende Material Polyurethan einen Härtegrad von zwischen um 60 und 90 hat.

21. Karren (10), mit:
einer Karrenkarosse (20) mit wenigstens einem Rad (18) zum Bewegen auf einem Gleis (14); und wenigstens einer Komponente, die mit der Karrenkarosse (20) zusammenwirkt, wobei die Komponente wenigstens eine Fläche und ein schalldämmendes Material, das zur Schalldämmung auf die Fläche aufgebracht ist, hat; wobei die wenigstens eine Komponente eine aus den folgenden ist:
einem Hebedaumen (30) des Karrens;
einem zurückziehbaren Mitnehmer (50) des Karrens;
einer Aufnahmeschulter (120) des Karrens (10);
einer Karosse (20) des Karrens (10), wo die Karosse (20) einen Hebedaumen (30) oder einen zurückziehbaren Mitnehmer (50) des Karrens (10) berührt.

22. Karren (10) nach Anspruch 21, bei dem die wenigstens eine Komponente durch irgendeine der folgenden gebildet ist:
einem Hebedaumen (30), der schwenkbar an der Karrenkarosse (20) angebracht ist, wobei der Hebedaumen (30) zwischen einer ersten und einer weiten Position bewegbar ist;
einem zurückziehbaren Mitnehmer (50), der von dem Hebedaumen (30) bewegbar ist; und
einer Aufnahmeschulter (120), die mit der Karrenkarosse (20) zusammenwirkt; und wobei wenigstens eine aus Hebedaumen (30), zurückziehbarem Mitnehmer (50) und der Aufnahmeschulter (120) die wenigstens eine Fläche und das schalldämmende Mittel, das zur Schalldämmung auf die Fläche aufgebracht ist, umfaßt.

23. Karren (10) nach Anspruch 21 oder 22, bei dem die Karrenkarosse (20) wenigstens eine Fläche und ein schalldämmendes Material, das auf die Fläche der Karrenkarosse (20) für die Schalldämmung aufgebracht ist, hat.

24. Karren (10) nach Anspruch 22 oder 23, bei dem der Hebedaumen (30) wenigstens eine Fläche und das schalldämmende Material, das auf die Fläche des Hebedaumens (30) für die Schalldämmung aufgebracht ist, umfaßt und die wenigstens eine Fläche des Hebedaumens (30) wenigstens eine Fläche umfaßt, die mit der Aufnahmeschulter (120) eines weiteren Karrens in Eingriff zu bringen ist.

25. Karren (10) nach Anspruch 24, bei dem die wenigstens eine Fläche des Hebedaumens (30) wenigstens eine Fläche umfaßt, die eine Karosse (20) des Karrens (10) berührt.

26. Karren (10) nach Anspruch 24 oder 25, bei dem die wenigstens eine Fläche des Hebedaumens (30) wenigstens eine Fläche umfaßt, die einen zurückziehbaren Mitnehmer (50) des Karrens (10) berührt.

27. Karren (10) nach einem der Ansprüche 22 bis 25, bei dem der zurückziehbare Mitnehmer (50) wenigstens eine Fläche und ein schalldämmendes Material, das auf die Fläche des zurückziehbaren Mitnehmers (50) für die Schalldämmung aufgebracht ist, umfaßt.

28. Karren (10) nach Anspruch 27, bei dem die wenigstens eine Fläche des zurückziehbaren Mitnehmers (50) wenigstens eine Fläche umfaßt, die eine Karosse (20) des Karrens (10) berührt.

29. Karren (10) nach Anspruch 27 oder 28, bei dem die wenigstens eine Fläche des zurückziehbaren Mitnehmers (50) wenigstens eine Fläche umfaßt, die einen Hebedaumen (30) des Karrens (10) umfaßt.

30. Karren (10) nach Anspruch 27, 28 oder 29, bei dem die wenigstens eine Fläche des zurückziehbaren Mitnehmers (50) wenigstens ein Fläche umfaßt, die den Schubmitnehmer (16) berührt.

31. Karren (10) nach einem der Ansprüche 22 bis 30, bei dem das Aufbringen eines schalldämmenden Materials auf wenigstens eine Fläche wenigstens einer Komponente des Karrens (10) das Aufbringen des schalldämmenden Materials auf wenigstens eine Fläche der Aufnahmeschulter (120) des Karrens (10) umfaßt.

32. Karren (10) nach einem der Ansprüche 21 bis 31, bei dem die wenigstens eine Fläche wenigstens eine Fläche direkten Kontaktes umfaßt.

33. Karren (10) nach einem der Ansprüche 21 bis 32, bei dem die wenigstens eine Fläche wenigstens eine Fläche des Gleitkontaktes umfaßt.

34. Karren (10) nach einem der Ansprüche 21 bis 33, bei dem die wenigstens eine Fläche wenigstens eine kontaktfreie Fläche umfaßt.

35. Karren (10) nach einem der Ansprüche 21 bis 34, bei dem das Aufbringen des schalldämmenden Materials das Beschichten mit dem schalldämmenden Material umfaßt.

36. Karren (10) nach einem der Ansprüche 21 bis 35, bei dem das Aufbringen des schalldämmenden Materials das Formen des schalldämmenden Materials in einer Raumform und das Befestigen der Raumform an wenigstens einer Fläche umfaßt.

37. Karren (10) nach Anspruch 34, bei dem die wenigstens eine kontaktfreie Fläche einen Hohlraum umfaßt und das Aufbringen des schalldämmenden Materials auf die wenigstens eine kontaktfreie Fläche das Füllen des Hohlraums mit dem schalldämmenden Material umfaßt.

38. Karren (10) nach einem der Ansprüche 21 bis 37, bei dem das schalldämmende Material ein Polyurethan ist.

39. Karren (10) nach Anspruch 38, bei dem das schalldämmende Material Polyurethan einen Härtegrad von zwischen um 60 und 90 hat.

40. Komponente eines Förderkarrens (10), wobei die Komponente wenigstens eine Fläche hat, auf die ein schalldämmendes Material für die Schalldämmung aufgebracht ist, wobei die Komponente eine der folgenden ist:
ein Hebedaumen (30) des Förderkarrens;
ein zurückziehbarer Mitnehmer (50) des Förderkarrens;
eine Aufnahmeschulter (120) des Förderkarrens;
eine Karosse (20) des Förderkarrens, wo die Karosse (20) einen Hebedaumen (30) oder einen zurückziehbaren Mitnehmer (50) eines solchen Karrens (10) berührt, wenn er im Einsatz ist.

41. Komponente nach Anspruch 40, bei der die wenigstens eine Fläche eine Kontaktfläche umfaßt.

42. Komponente nach Anspruch 40 oder 41, bei dem die wenigstens eine Fläche eine kontaktfreie Fläche umfaßt.

43. Komponente nach einem der Ansprüche 40 bis 42, bei dem die Komponente ein Hebedaumen (30) des Förderkarrens ist.

44. Komponente nach einem der Ansprüche 40 bis 42, bei dem die Komponente ein zurückziehbarer Mitnehmer (50) des Förderkarrens ist.

45. Komponente nach einem der Ansprüche 40 bis 42, bei dem die Komponente eine Aufnahmeschulter (30) des Förderkarrens ist.

## Revendications

1. Procédé de réduction de son généré pendant le désengagement d'un chariot transporteur d'un entraîneur par collision entre le chariot transporteur et un chariot à l'arrêt, ce procédé comprenant l'application d'un matériau réducteur de son à au moins une zone d'au moins un composant parmi les composants suivants :
un levier à cames (30) du chariot transporteur ;
un crabot rétractable (50) du chariot transporteur ;
une came à accumulation (120) du chariot arrêté ;
un corps (20) d'un chariot transporteur où le corps (20) entre en contact avec un levier à frein (30) ou un crabot rétractable (50) du chariot transporteur.

2. Procédé selon la revendication 1, dans lequel l'application d'un matériau de réduction à au moins une zone d'au moins un composant des chariots transporteur et à l'arrêt comprend l'application du matériau de réduction de son à au moins une zone d'un levier à cames (30) du chariot transporteur.

3. Procédé selon la revendication 2, dans lequel la ou chaque zone du levier à cames (30) comprend au moins une zone qui entre en contact avec un corps (20) du chariot transporteur.

4. Procédé selon la revendication 2 ou 3, dans lequel la au moins une zone du levier à cames (30) comprend au moins une zone qui entre en contact avec une came à accumulation (120) du chariot à l'arrêt.

5. Procédé selon l'une quelconque des revendications 2, 3 ou 4, dans lequel la ou chaque zone du levier à cames (30) comprend au moins une zone qui entre en contact avec un crabot rétractable (50) du chariot transporteur.

6. Procédé selon l'une quelconque des revendications précédentes, dans lequel l'application d'un matériau de réduction de son à au moins une zone d'au moins un composant des chariots transporteur et à l'arrêt comprend l'application du matériau de réduction de son à au moins une zone d'un crabot rétractable (50) du chariot transporteur.

7. Procédé selon la revendication 6, dans lequel la ou chaque zone du crabot rétractable (50) comprend au moins une zone qui entre en contact avec un corps (20) du chariot transporteur.

8. Procédé selon la revendication 6 ou 7, dans lequel la ou chaque zone du crabot rétractable (50) comprend au moins une zone qui entre en contact avec un levier à cames (30) du chariot transporteur.

9. Procédé selon l'une quelconque des revendications 6, 7 ou 8, dans lequel la ou chaque zone du crabot rétractable (50) comprend au moins une zone qui entre en contact avec l'entraîneur (16).

10. Procédé selon l'une quelconque des revendications précédentes, dans lequel l'application d'un matériau de réduction de son à au moins une zone d'au moins un composant des chariots transporteur et à l'arrêt comprend l'application du matériau de réduction de son à au moins une zone d'une came à accumulation (120) du chariot arrêté.

11. Procédé selon l'une quelconque des revendications précédentes, dans lequel l'application d'un matériau de réduction de son à au moins une zone d'au moins un composant des chariots transporteur et à l'arrêt comprend l'application du matériau de réduction de son à au moins une zone d'un corps (20) du chariot transporteur où le corps (20) entre en contact avec un levier à cames (30) du chariot transporteur.

12. Procédé selon l'une quelconque des revendications précédentes, dans lequel l'application d'un matériau de réduction de son à au moins une zone d'au moins un composant des chariots transporteur et à l'arrêt comprend l'application du matériau de réduction de son à au moins une zone d'un corps (20) du chariot transporteur où le corps (20) entre en contact avec un crabot rétractable (50) du chariot transporteur.

13. Procédé selon l'une quelconque des revendications précédentes, dans lequel la ou chaque zone comprend au moins une zone de contact direct.

14. Procédé selon l'une quelconque des revendications précédentes, dans lequel la ou chaque zone comprend au moins une zone de contact coulissant.

15. Procédé selon l'une quelconque des revendications précédentes, dans lequel la ou chaque zone comprend au moins une zone de non contact.

16. Procédé selon l'une quelconque des revendications précédentes, dans lequel l'application du matériau de réduction, de son comprend le revêtement du matériau de réduction de son.

17. Procédé selon l'une quelconque des revendications précédentes, dans lequel l'application du matériau de réduction de son comprend le moulage du matériau de réduction de son pour obtenir une forme et la liaison de la forme à au moins une zone .

18. Procédé selon l'une quelconque des revendications 15, dans lequel la ou chaque zone de non contact comprend une cavité, et l'application du matériau de réduction de son à la ou chaque zone de non contact comprend le remplissage de la cavité avec le matériau de réduction de son.

19. Procédé selon l'une quelconque des revendications précédentes, dans lequel le matériau de réduction de son est du polyuréthane.

20. Procédé selon l'une quelconque des revendications 19, dans lequel le matériau de réduction de son en polyuréthane a une mesure de duromètre comprise entre environ 60 et 90.

21. Chariot (10) comprenant :
un corps de chariot (20) ayant au moins une roue (18) pour se déplacer sur un rail (14) ; et au moins un composant associé de manière coopérative au corps du chariot (20), le composant ayant au moins une zone et un matériau de réduction de son appliqué à la zone pour réduire le son ; ledit ou chaque composant étant un élément parmi les éléments suivants :
un levier à cames (30) du chariot ;
un crabot rétractable (50) du chariot ;
une came à accumulation (120) du chariot (10) ;
un corps (20) du chariot (10) où le corps (20) entre en contact avec un levier à cames (30) ou un crabot rétractable (50) du chariot (10) ;

22. Chariot (10) selon la revendication 21, dans lequel le ou chaque composant est constitué de n'importe quel élément parmi les éléments suivants :
un levier à cames (30) monté de manière pivotante au corps du chariot (20), le levier à cames (30) pouvant se déplacer entre une première et une seconde position ;
un crabot rétractable (50) pouvant être déplacé par le levier à cames (30) ; et une came à accumulation (120) associée de manière coopérative au corps du chariot (20) ; et dans lequel au moins un élément parmi le levier à cames (30), le crabot rétractable (50) et la came à accumulation (120) comprend la ou chaque zone et le matériau de réduction de son appliqué à la zone pour une réduction de son.

23. Chariot (10) selon la revendication 21 ou 22, dans lequel le corps du chariot (20) présente au moins une zone et un matériau de réduction de son appliqué à la zone du corps du chariot (20) pour une réduction de son.

24. Chariot (10) selon la revendication 22 ou 23, dans lequel le levier à cames (30) comprend au moins une zone et le matériau appliqué à la zone de levier à cames (30) pour une réduction de son et la ou chaque zone du levier à cames (30) comprend au moins une zone qui peut s'engager avec une came à accumulation (120) d' un autre chariot.

25. Chariot (10) selon la revendication 24, dans lequel la ou chaque zone du levier à cames (30) comprend au moins une zone qui entre en contact avec un corps (20) du chariot (10).

26. Chariot (10) selon la revendication 24 ou 25, dans lequel la ou chaque zone du levier à cames (30) comprend au moins une zone qui entre en contact avec un crabot rétractable (50) du chariot (10).

27. Chariot (10) selon l'une quelconque des revendications 22 à 25, dans lequel le crabot rétractable (50) comprend au moins une zone et un matériau de réduction de son appliqué à la zone du crabot rétractable (50) pour une réduction de son.

28. Chariot (10) selon la revendication 27, dans lequel la ou chaque zone du crabot rétractable (50) comprend au moins une zone qui entre en contact avec un corps (20) du chariot (10) .

29. Chariot (10) selon la revendication 27 ou 28, dans lequel la au moins une zone du crabot rétractable (50) comprend ou chaque zone qui entre en contact avec un levier à cames (30) du chariot (10).

30. Chariot (10) selon l'une quelconque des revendications 27, 28 ou 29, dans lequel la ou chaque zone du crabot rétractable (50) comprend au moins une zone qui entre en contact avec l'entraîneur (16).

31. Chariot (10) selon l'une quelconque des revendications 22 à 30, dans lequel l'application d' un matériau de réduction de son à ou chaque zone d'au moins un composant du chariot (10) comprend l'application du matériau de réduction de son à au moins une zone de la came à accumulation (120) du chariot (10).

32. Chariot (10) selon l'une quelconque des revendications 21 à 31, dans lequel la ou chaque zone comprend au moins une zone de contact direct.

33. Chariot (10) selon l'une quelconque des revendications 21 à 32, dans lequel la ou chaque zone comprend au moins une zone de contact coulissant.

34. Chariot (10) selon l'une quelconque des revendications 21 à 33, dans lequel la ou chaque zone comprend au moins une zone de non contact.

35. Chariot (10) selon l'une quelconque des revendications 21 à 34, dans lequel l'application du matériau de réduction de son comprend le revêtement du matériau de réduction de son.

36. Chariot (10) selon l'une quelconque des revendications 21 à 35, dans lequel l'application du matériau de réduction de son comprend le moulage du matériau de réduction de son pour obtenir une forme et la liaison de la forme à au moins une zone.

37. Chariot (10) selon la revendication 34, dans lequel la ou chaque zone de non contact comprend une cavité et l'application du matériau de réduction de son à la ou chaque zone de non contact comprend le remplissage de la cavité avec le matériau de réduction de son.

38. Chariot (10) selon l'une quelconque des revendications 21 à 37, dans lequel le matériau de réduction de son est du polyuréthane.

39. Chariot (10) selon la revendication 38, dans lequel le matériau de réduction de son en polyuréthane a une mesure de duromètre comprise entre environ 60 et 90.

40. Composant d'un chariot transporteur (10), le composant ayant au moins une zone à laquelle est appliqué le matériau de réduction de son en vue d'une réduction de son, le composant étant un élément parmi les éléments suivants :
un levier à cames de chariot transporteur (30) ;
un crabot rétractable de chariot transporteur (50) ;
une came à accumulation de chariot transporteur (120) ;
un corps de chariot transporteur (20) où le corps (20) être en contact avec un levier à cames (30) ou un crabot rétractable (50) d'un tel chariot (10) lors de son utilisation.

41. Composant selon la revendication 40, dans lequel ladite ou chaque zone comprend une zone de contact.

42. Composant selon la revendication 40 ou 41, dans lequel ladite ou chaque zone comprend une zone de non contact.

43. Composant selon l'une quelconque des revendications 40 à 42, dans lequel le composant est un levier à cames de chariot transporteur (30).

44. Composant selon l'une quelconque des revendications 40 à 42, dans lequel le composant est un crabot rétractable de chariot transporteur (50).

45. Composant selon l'une quelconque des revendications 40 à 42, dans lequel le composant est une came à accumulation de chariot transporteur (120).
